# EUROPÄISCHE PATENTSCHRIFT

(11) **EP 2 619 139 B1**
(45) Veröffentlichungstag und Bekanntmachung des Hinweises auf die Patenterteilung: **18.11.2015**
(21) Anmeldenummer: 11761551.8
(22) Anmeldetag: 20.09.2011
(51) Int. Cl.: C01G 45/12, H01M 4/505, H01M 4/525, H01M 4/131, C01G 53/00, H01M 4/485, H01M 4/62, H01M 10/052

(54) **VERFAHREN ZUR HERSTELLUNG VON OBERFLÄCHEN MODIFIZIERTEN ELEKTRODENMATERIALIEN**
PROCESS FOR PREPARING ELECTRODE MATERIALS
PROCEDE DE PREPARATION DE MATERIAUX D'ELECTRODE

(30) Priorität: 21.09.2010 EP 10177833
(43) Veröffentlichungstag der Anmeldung: 31.07.2013
(73) Patentinhaber: BASF SE, 67056 Ludwigshafen (DE)
(72) Erfinder: SCHULZ-DOBRICK, Martin, 68165 Mannheim (DE); EWALD, Bastian, 67061 Ludwigshafen (DE); LAMPERT, Jordan, Keith, 67063 Ludwigshafen (DE)
(86) Internationale Anmeldenummer: PCT/EP2011/066300
(87) Internationale Veröffentlichungsnummer: WO 2012/038412

(56) Entgegenhaltungen:
- US-A1- 2009 286 157
- Q. Y. WANG ET AL: "High capacity double-layer surface modified Li[Li0.2Mn0.54Ni0.13Co0.13]O2 cathode with improved rate capability", JOURNAL OF MATERIALS CHEMISTRY, Bd. 19, Nr. 28, 1. Januar 2009 (2009-01-01), Seite 4965, XP55016651, ISSN: 0959-9428, DOI: 10.1039/b823506f
- Y. WU, A. VADIVEL MURUGAN, AND A. MANTHIRAM: JOURNAL OF THE ELECTROCHEMICAL SOCIETY, Bd. 155, Nr. 9, 11. Juli 2008 (2008-07-11) , Seiten A635-A641, XP002667286, DOI: 10.1149/1.2948350

## Beschreibung

Die vorliegende Erfindung betrifft ein Verfahren zur Herstellung von Elektrodenmaterialien, das dadurch gekennzeichnet ist, dass man ein Mischoxid, das Lithium und mindestens ein Übergangsmetall als Kationen aufweist, mit mindestens einer Sauerstoff-haltigen organischen Verbindung von Schwefel oder Phosphor oder einem korrespondierenden Alkalimetall- oder Ammoniumsalz einer Sauerstoff-haltigen organischen Verbindung von Schwefel oder Phosphor oder einem vollständig alkylierten Derivat einer Sauerstoff-haltigen Verbindung von Schwefel oder Phosphor behandelt.

Weiterhin betrifft die vorliegende Erfindung Elektrodenmaterialien, die nach dem erfindungsgemäßen Verfahren erhältlich sind, und ihre Verwendung in oder zur Herstellung von elektrochemischen Zellen. Weiterhin betrifft die vorliegende Erfindung elektrochemische Zellen, enthaltend mindestens ein erfindungsgemäßes Elektrodenmaterial.

Auf der Suche nach vorteilhaften Elektrodenmaterialien für Batterien, die als leitfähige Spezies Lithium-Ionen nutzen, wurden bisher zahlreiche Materialien vorgeschlagen, beispielsweise Lithium-haltige Spinelle, Mischoxide wie beispielsweise lithiierte Nickel-Mangan-Cobalt-Oxide und Lithium-Eisen-Phosphate. Besondere Aufmerksamkeit wird momentan den Mischoxiden gewidmet.

Um die Energiedichte der in der Regel recht schweren elektrochemischen Zellen, die auf derartigen Elektroden basieren, zu verbessern, werden stets verbesserte Elektrodenmaterialien mit verbessertem Auflade/Entladeverhalten gesucht.

Darüber hinaus ist man an Kathodenmaterialien interessiert, welche möglichst stabile elektrochemische Zellen ermöglichen. Dazu sollten die Kathodenmaterialien in möglichst geringem Umfang mit dem Elektrolyt und dabei insbesondere mit den eingesetzten Lösungsmitteln reagieren, da bei der Reaktion entstehenden Verbindungen die Ionenleitfähigkeit in der Zelle behindern können, was negative Auswirkungen auf die Langzeitstabilität der elektrochemischen Zellen hat.

In US 2009/0286157 wird ein Verfahren zur Oberflächenmodifizierung von Elektroden für Lithium-Ionen-Batterien vorgeschlagen, durch das die Gasentwicklung beim Betreiben einer Lithium-Ionen-Batterie verringert werden kann. Das Verfahren zur Oberflächenmodifizierung beruht darauf, dass man Elektrodenmaterialien mit Silanen oder Organometallverbindungen umsetzt. Viele der vorgeschlagenen Silane und der Organometallverbindungen sind jedoch umständlich in der Herstellung und schwierig in der Handhabung.

Q. Y. Wang et al, J. Mater. Chem., 2009, 19(28), 4965-4972 und Y. Wu, A. Vadivel Murugan und A. Manthiram, J. Electrochem. Soc, 2008, 155(9), A635-641 beschreiben Verfahren zur Oberflächenmodifizierung von Elektrodenmaterialien zur Verbesserung der Zyklenfestigkeit.

Dementsprechend wurde das eingangs definierte Verfahren gefunden, kurz auch "erfindungsgemäßes Verfahren" genannt.

Eingangs definierte organische Schwefelverbindungen werden im Rahmen der vorliegenden Erfindung auch kurz "organische Schwefelverbindung", eingangs definierte organische Phosphorverbindung auch kurz als "organische Phosphorverbindung" bezeichnet.

Das erfindungsgemäße Verfahren geht aus von einem Mischoxid, das Lithium und mindestens ein, bevorzugt mindestens zwei und besonders bevorzugt mindestens drei verschiedene Übergangsmetalle als Kationen enthält.

Bevorzugt enthält Mischoxid bis maximal 10, besonders bevorzugt bis maximal 5 verschiedene Übergangsmetalle als Kationen.

Dabei soll unter "enthält als Kationen" solche Kationen verstanden werden, die nicht nur als Spuren in dem erfindungsgemäß eingesetzten Mischoxid vorhanden sind, sondern in Anteilen von mindestens 1 Gew.-%, bezogen auf gesamten Metallgehalt des betreffenden Mischoxids, bevorzugt in Anteilen von mindestens 2 Gew.-% und besonders bevorzugt in Anteilen von mindestens 5 Gew.-%.

In einer Ausführungsform der vorliegenden Erfindung weist Mischoxid drei verschiedene Übergangsmetalle als Kationen auf.

In einer Ausführungsform der vorliegenden Erfindung kann Lithium zu bis zu 5 mol-% durch ein oder mehrere andere Alkalimetalle oder durch Magnesium substituiert sein. Vorzugsweise ist Lithium zu weniger als 0,5 mol-% durch andere Alkalimetalle oder durch Magnesium substituiert.

In einer Ausführungsform der vorliegenden Erfindung kann Lithium zu mindestens 10 mol-ppm durch mindestens ein anderes Alkalimetall oder Magnesium ersetzt sein.

In einer Ausführungsform der vorliegenden Erfindung liegt Mischoxid in partikulärer Form vor, beispielsweise in Form von Partikeln mit einem mittleren Durchmesser im Bereich von 10 nm bis 100 µm. Dabei können Partikel Primärpartikel und Sekundärpartikel umfassen. In einer Ausführungsform der vorliegenden Erfindung können Primärpartikel von Mischoxid einen mittleren Durchmesser im Bereich von 10 nm bis 950 nm aufweisen und Sekundärpartikel einen mittleren Durchmesser im Bereich von 1 µm bis 100 µm.

In einer Ausführungsform der vorliegenden Erfindung wählt man Übergangsmetalle, die im Rahmen der vorliegenden Erfindung auch als "M" bezeichnet werden können, aus den Gruppen 3 bis 12 des Periodensystems der Elemente, beispielsweise Ti, V, Cr, Mn, Fe, Co, Ni, Zn oder Mo, bevorzugt sind Mn, Co und Ni.

In einer Ausführungsform der vorliegenden Erfindung wählt man Mischoxide aus Verbindungen der allgemeinen Formel (I)

Li_{z}MₓO_{y} (I)

in denen die Variablen wie folgt gewählt sind:
- M: ein oder mehrere Metalle der Gruppen 3 bis 12 des Periodensystems der Elemente, beispielsweise Ti, V, Cr, Mn, Fe, Co, Ni, Zn, Mo, bevorzugt sind Mn, Co und Ni,
- x: eine Zahl im Bereich von 1 bis 2,
- y: eine Zahl im Bereich von 2 bis 4,
- z: eine Zahl im Bereich von 0,5 bis 1,5.

In einer Ausführungsform der vorliegenden Erfindung wählt man Mischoxide aus Verbindungen der allgemeinen Formel (Ia) oder (Ib)

Li₁₊ₜM₁₋ₜO₂ (Ia)

Li₁₊ₜM₂₋ₜO₄₋ₐ (Ib)

wobei a im Bereich von null bis 0,4 liegt,
wobei t im Bereich von null bis 0,4 liegt, und
die übrigen Variablen wie vorstehend genannt gewählt sind.

In einer Ausführungsform wählt man M aus Ni_{0,25}Mn_{0,75}. Diese Variante ist insbesondere dann bevorzugt, wenn man Mischoxid aus Verbindungen der Formel (Ib) wählt.

In einer Ausführungsform der vorliegenden Erfindung wählt man M aus Ni_{0,33}Mn_{0,33}Co_{0,33}, Ni_{0,5}Mn_{0,3}Co_{0,2}, Ni_{0,4}Mn_{0,2}Co_{0,4}, Ni_{0,22}Mn_{0,66},Co_{0,12}, Ni_{0,4}Co_{0,3}Mn_{0,3}, Ni_{0,45}Co_{0,1}Mn_{0,45}, Ni_{0,4}Co_{0,1}Mn_{0,5} und Ni_{0,5}Co_{0,1}Mn₀,₄.

In einer Ausführungsform der vorliegenden Erfindung sind bis zu 10 Gew.-% von Metall der Gruppen 3 bis 12 des Periodensystems der Elemente ersetzt durch Al, beispielsweise 0,5 bis 10 Gew.-%. In einer anderen Ausführungsform der vorliegenden Erfindung ist M nicht zu messbaren Anteilen durch Al ersetzt.

In einer Ausführungsform der vorliegenden Erfindung kann Mischoxid dotiert oder verunreinigt sein mit einem oder mehreren weiteren Metallkationen, beispielsweise mit Erdalkalimetallkationen, insbesondere mit Mg²⁺ oder Ca²⁺

M kann beispielsweise in der Oxidationsstufe +2 bis zur höchsten möglichen Oxidationsstufe vorliegen, im Falle von Mn vorzugsweise in der Oxidationsstufe +2 bis +4, im Falle von Co oder Fe vorzugsweise in der Oxidationsstufe +2 bis +3.

In einer Ausführungsform der vorliegenden Erfindung kann Mischoxid im Bereich von 10 ppm bis zu 5 Gew.-%, bezogen auf gesamtes Mischoxid, Anionen enthalten, die nicht Oxidionen sind, beispielsweise Phosphat, Silicat und insbesondere Sulfat.

Erfindungsgemäß behandelt man mit mindestens einer Sauerstoff-haltigen organischen Verbindung von Schwefel oder Phosphor, also mit mindestens einer Schwefel- oder Phosphorverbindung, die mindestens einen organischen Rest aufweist, der direkt mit Schwefel bzw. Phosphor verbunden sein kann oder über ein oder mehrere andere Atome, bevorzugt über ein Sauerstoffatom, mit Schwefel bzw. Phosphor verbunden ist. Darüber hinaus kann Sauerstoff-haltige organische Verbindung von Schwefel bzw. Phosphor eine oder mehrere saure Gruppen aufweisen, die als Säure selbst oder als korrespondierendes Alkali- oder Ammoniumsalz vorliegen de können.

In einer Ausführungsform der vorliegenden Erfindung behandelt man mit mindestens einer Verbindung der allgemeinen Formel O₂S(OR¹)₂, O₂SR²(OR¹), O₂S(R¹)₂, OS(OR¹)₂, OSR²(OR¹), OS(R¹)₂,, S(OR¹)₂, SR²(OR¹), O₂S(OR¹)OH, O₂SR²(OH), OS(OR¹)OH oder OSR²(OH), oder mit einem korrespondierenden Alkalimetallsalz oder Ammoniumsalz davon. Als Alkalimetallsalze sind Kaliumsalze und insbesondere Natriumsalze zu nennen. Als Ammoniumsalze sind Salze von geeigneten Aminen zu nennen wie beispielsweise von C₁-C₄-Alkylamin, Di-C₁-C₄-Alkylamin und Tri-C₁-C₄-Alkylamin, wobei Alkylgruppen in Di-C₁-C₄-Alkylaminen und Tri-C₁-C₄-Alkylaminen verschieden oder vorzugsweise gleich sein können. Geeignet sind weiterhin Salze von Alkanolamin, insbesondere Ethanolamin, beispielsweise Ethanolamin, N,N-Diethanolamin, N,N,N-Triethanolamin, N-Methylethanolamin, N,N-Dimethylethanolamin, N-Methyldiethanolamin und N-n-Butylethanolamin.

Dabei sind die Variablen unabhängig voneinander wie folgt definiert:
- R¹: ist verschieden oder vorzugsweise - wenn möglich - gleich und gewählt aus C₁-C₆-Alkyl, beispielsweise Methyl, Ethyl, n-Propyl, iso-Propyl, n-Butyl, iso-Butyl, sec.-Butyl, tert.-Butyl, n-Pentyl, iso-Amyl, iso-Pentyl, n-Hexyl, iso-Hexyl und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl.
- R²: ist gewählt aus Phenyl und vorzugsweise C₁-C₆-Alkyl, beispielsweise Methyl, Ethyl, n-Propyl, iso-Propyl, n-Butyl, iso-Butyl, sec.-Butyl, tert.-Butyl, n-Pentyl, iso-Amyl, iso-Pentyl, n-Hexyl, iso-Hexyl und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl.

In einer Ausführungsform der vorliegenden Erfindung behandelt man mit mindestens einer Verbindung der allgemeinen Formel O=P(OR¹)₃, O=P(OH)(OR¹)₂, O=P(OH)₂(OR¹), O=PR³(OR¹)₂, O=PR³(OH)(OR¹), O=P(R³)₂(OR¹), O=P(R³)₂(OH), O=P(R³)₃ P(OR¹)₃, P(OH)(OR¹)₂, P(OH)₂(OR¹), PR³(OR¹)₂, PR³(OH)(OR¹) oder P(R³)₂(OH).

In einer Ausführungsform der vorliegenden Erfindung wählt man vollständig alkylierte Derivate einer Sauerstoff-haltigen Verbindung von Phosphor aus Verbindungen der allgemeinen Formel O=P(OR¹)₃ und Dialkylalkylphosphonaten der allgemeinen Formel R³-P(O)(OR¹)₂, in anderer Schreibweise O=PR³(OR¹)₂, wobei die Variablen wie folgt definiert sind:
- R¹: sind verschieden oder vorzugsweise gleich und gewählt aus C₁-C₆-Alkyl, wie vorstehend definiert, und
- R³: sind verschieden oder vorzugsweise gleich und gewählt aus Wasserstoff, Phenyl und C₁-C₄-Alkyl, bevorzugt Methyl oder Ethyl.

Bevorzugt sind in Verbindung der Formel O=PR³(OR¹)₂ R¹ und R³ jeweils gleich und gewählt aus Methyl und Ethyl.

Das erfindungsgemäße Verfahren kann man in der Gasphase oder in flüssiger (kondensierter) Phase durchführen. Unter einer Behandlung in der Gasphase ist zu verstehen, dass organische Schwefelverbindung(en) bzw. organische Phosphorverbindung(en) überwiegend, d. h. zu mindestens 50 mol-%, in gasförmigem Zustand vorliegen. Das oder die Mischoxid(e) liegen bei der Durchführung des erfindungsgemäßen Verfahrens selbstverständlich nicht in der Gasphase vor.

Unter einer Behandlung in flüssiger Phase ist zu verstehen, dass man die organische Schwefelverbindung(en) bzw. organische Phosphorverbindung(en)in gelöster, emulgierter oder suspendierter Form oder, falls sie bei der Behandlungstemperatur flüssig sind, in Substanz einsetzt. Das oder die Mischoxid(e) liegen bei der Durchführung des erfindungsgemäßen Verfahrens in fester Form vor.

In einer Ausführungsform der vorliegenden Erfindung behandelt man Mischoxid mit organischer Schwefelverbindung(en) bzw. mit organischer Phosphorverbindung(en) bei Temperaturen im Bereich von -20 bis +1000°C, bevorzugt +20 bis +900°C.

In einer Ausführungsform der vorliegenden Erfindung behandelt man Mischoxid mit organischer Schwefelverbindung(en) bzw. mit organischer Phosphorverbindung(en) in Gegenwart eines Lösungs- oder Dispergiermittels. Geeignete Lösungsmittel sind beispielsweise aliphatische oder aromatische Kohlenwasserstoffe, organische Carbonate, weiterhin Ether, Acetale, Ketale und nicht-protische Amide, Ketone und Alkohole. Beispielhaft seien aufgeführt: n-Heptan, n-Dekan, Decahydronaphthalin, Cyclohexan, Toluol, Ethylbenzol, ortho-, meta- und para-Xylol, Dimethylcarbonat, Diethylcarbonat, Methylethylcarbonat, Ethylencarbonat, Propylencarbonat, Diethylether, Diisopropylether, Di-n-Butylether, Methyl-tert.-butylether, 1,2-Dimethoxyethan, 1,1-Dimethoxyethan, 1,2-Diethoxyethan, 1,1-Diethoxyethan, Tetrahydrofuran (THF), 1,4-Dioxan, 1,3-Dioxolan, N,N-Dimethylformamid, N,N-Dimethylacetamid und N-Methylpyrrolidon, Aceton, Metylethylketon, Cyclohexanon, Methanol, Ethanol und Isopropanol.

In einer Ausführungsform der vorliegenden Erfindung setzt man organische Schwefelverbindung(en) bzw. organische Phosphorverbindung(en) in gasförmiger Form ein, beispielsweise in Reinform oder mit einem Trägergas. Als Trägergase sind beispielsweise Stickstoff, Edelgase wie beispielsweise Argon und weiterhin Sauerstoff oder Luft geeignet.

In einer Ausführungsform der vorliegenden Erfindung arbeitet man mit 1 bis 99 Vol.-% Trägergas und 99 bis 1 Vol.-% gasförmiger organischer Schwefelverbindung/organischen Schwefelverbindungen bzw. mit organischer Phosphorverbindung/organischen Phosphorverbindungen, bevorzugt mit 5 bis 95 Vol.-% Trägergas und 95 bis 5 Vol.-% gasförmiger organischer Schwefelverbindung/organischen Schwefelverbindungen bzw. organischer Phosphorverbindung/organischen Phosphorverbindungen.

In einer Ausführungsform der vorliegenden Erfindung führt man das erfindungsgemäße Verfahren bei Normaldruck durch.

In einer anderen Ausführungsform der vorliegenden Erfindung führt man das erfindungsgemäße Verfahren bei erhöhtem Druck durch, beispielsweise bei 1,1 bis 20 bar.

In einer anderen Ausführungsform der vorliegenden Erfindung führt man das erfindungsgemäße Verfahren bei vermindertem Druck durch, beispielsweise bei 0,5 bis 900 mbar, insbesondere bei 5 bis 500 mbar.

In einer Ausführungsform der vorliegenden Erfindung kann man das erfindungsgemäße Verfahren über einen Zeitraum im Bereich von 1 Minute bis zu 24 Stunden, bevorzugt im Bereich von 10 Minuten bis 3 Stunden durchführen.

In einer Ausführungsform der vorliegenden Erfindung wählt man ein Gewichtsverhältnis von Mischoxid zu organischer Schwefelverbindung(en) bzw. organischer Phosphorverbindung(en) im Verhältnis 0,01 zu 1 bis 1000 zu 1.

In einer Ausführungsform der vorliegenden Erfindung behandelt man Mischoxid mit einer organischen Schwefelverbindung oder einer organischen Phosphorverbindung. In einer anderen Ausführungsform behandelt man Mischoxid mit zwei verschiedenen organischen Schwefelverbindungen oder mit zwei verschiedenen organischen Phosphorverbindungen oder mit einer organischen Schwefelverbindungen und einer organischen Phosphorverbindung, beispielsweise simultan oder nacheinander.

Natürlich kann man erfindungsgemäß nicht nur ein Mischoxid behandeln, sondern auch Gemische von zwei oder mehr Mischoxiden.

In einer Ausführungsform der vorliegenden Erfindung behandelt man Mischoxid in einer späten Phase oder gegen Ende des Schrittes der Bildung des Mischoxids, beispielsweise aus Hydroxiden, basischen Oxiden oder Carbonaten.

In einer Ausführungsform der vorliegenden Erfindung führt man die erfindungsgemäße Behandlung von Mischoxid mit organischer Schwefelverbindung bzw. organischer Phosphorverbindung in einem Drehrohrofen, einem Pendelreaktor, einem Muffeloffen oder einem Durchschiebeofen durch.

In einer Ausführungsform der vorliegenden Erfindung nutzt man einen Durchschiebeofen oder Pendel- oder Drehrohrofen, der mehrere Abschnitte aufweist, und leitet einen Gasstrom, der organische Schwefelverbindung(en) bzw. organische Phosphorverbindung(en) enthält, in mindestens einem Abschnitt, beispielsweise im letzen Abschnitt ein. Dabei bezeichnet der letzte Abschnitt denjenigen Abschnitt, den das zu erhitzende Gut zuletzt durchläuft, bevor es den Ofen verlässt.

Nach der eigentlichen Behandlung mit Schwefel- bzw. Phosphorverbindung kann man nicht umgesetzte organische Schwefelverbindung(en) bzw. nicht umgesetzte organische Phosphorverbindung(en), eventuelle Nebenprodukte und eventuell eingesetztes Lösungsmittel abtrennen.

Wenn man die Behandlung von Mischoxid mit organischer Schwefelverbindung bzw. organischer Phosphorverbindung in der Gasphase durchgeführt hat, so kann man beispielsweise nicht umgesetzte organische Schwefelverbindung(en) bzw. nicht umgesetzte organische Phosphorverbindung(en) und eventuelle Nebenprodukte durch Ausspülen mit Inertgas, durch Evakuieren oder durch Ausheizen, gegebenenfalls bei vermindertem Druck, abtrennen.

Wenn man die Behandlung von Mischoxid mit organischer Schwefelverbindung(en) bzw. organischer Phosphorverbindung(en) in flüssiger Phase in Gegenwart von Lösungsmittel durchgeführt hat, so kann man beispielsweise nicht umgesetzte organische Schwefelverbindung(en) bzw. nicht umgesetzte organische Phosphorverbindung(en) und Lösungsmittel durch Filtration, Auswaschen, Abdestillieren von Lösungsmittel, Verdampfen von organischer Schwefelverbindung(en) bzw. organischer Phosphorverbindung(en) und/oder Lösungsmittel oder Extraktion oder durch eine Kombination von einer oder mehreren der vorstehend genannten Maßnahmen abtrennen.

Anschließend kann man erfindungsgemäß behandeltes Mischoxid thermisch nachbehandeln, beispielsweise bei 100°C bis 1000°C, bevorzugt 200°C bis 600°C. Eine thermische Nachbehandlung kann man unter Luft oder inertem Trägergas durchführen.

In einer Ausführungsform der vorliegenden Erfindung wählt man für die thermische Nachbehandlung einen Pendelofen, einen Durchschiebeofen oder einen Drehrohrofen.

In einer Ausführungsform der vorliegenden Erfindung führt man die thermische Nachbehandlung über einen Zeitraum im Bereich von einer Minute bis 24 Stunden, bevorzugt 30 Minuten bis 4 Stunden durch.

In einer Ausführungsform der vorliegenden Erfindung geht man so vor, dass man Mischoxid in einem Gemisch mit mindestens einem weiteren Bestandteil von Elektroden gemeinsam mit mindestens einer organischen Schwefelverbindung bzw. mindestens einer organischen Phosphorverbindung behandelt, wobei Bestandteile von Elektroden gewählt werden aus Kohlenstoff, einer Vorstufe für Kohlenstoff und polymerem Bindemittel.

In einer anderen Ausführungsform der vorliegenden Erfindung geht man so vor, dass man Mischoxid alleine mit mindestens einer organischen Schwefelverbindung bzw. mindestens einer organischen Phosphorverbindung behandelt, also in Abwesenheit von Kohlenstoff, einer Vorstufe für Kohlenstoff und polymerem Bindemittel.

Nach dem erfindungsgemäßen Verfahren hergestellte Materialien sind sehr gut als Elektrodenmaterial geeignet. Ein weiterer Gegenstand der vorliegenden Anmeldung sind daher Elektrodenmaterialien, hergestellt nach dem erfindungsgemäßen Verfahren. Sie haben nicht nur die positiven Eigenschaften der zugrunde liegenden Mischoxide, sondern sind auch sehr gut rieselfähig und lassen sich daher vorzüglich zu Elektroden verarbeiten.

Ein weiterer Gegenstand der vorliegenden Erfindung sind Elektrodenmaterialien, enthaltend mindestens ein Mischoxid der allgemeinen Formel (I)

Li_{z}MₓO_{y} (I)

in der die Variablen wie folgt gewählt sind:
- M: ein oder mehrere Metalle der Gruppen 3 bis 12 des Periodensystems der Elemente, beispielsweise Ti, V, Cr, Mn, Fe, Co, Ni, Zn oder Mo, bevorzugt sind Mn, Co und Ni,
- x: eine Zahl im Bereich von 1 bis 2,
- y: eine Zahl im Bereich von 2 bis 4,
- z: eine Zahl im Bereich von 0,5 bis 1,5,
modifiziert mit im Bereich von 0,02 bis 1 Gew.-%, bevorzugt bis 0,2 Gew.-%, bezogen auf das Mischoxid, an Phosphor in der Oxidationsstufe +3 oder +5, im Rahmen der vorliegenden Erfindung auch kurz als "erfindungsgemäßes modifiziertes Mischoxid" bezeichnet.

In einer Ausführungsform der vorliegenden Erfindung wählt man Mischoxide aus Verbindungen der allgemeinen Formel (Ia) oder (Ib)

Li₁₊ₜM₁₋ₜO₂ (Ia)

Li₁₊ₜM₂₋ₜO₄₋ₐ (Ib)

wobei a im Bereich von null bis 0,4 liegt,
wobei t im Bereich von null bis 0,4 liegt, und
die übrigen Variablen wie vorstehend genannt gewählt sind.

Ohne sich auf eine Theorie festlegen zu wollen, kann man annehmen, dass Mischoxid mit Phosphor in der Oxidationsstufe +3 oder vorzugsweise +5 oder mit Schwefel in der Oxidationsstufe +6 dotiert sein kann, das heißt, dass Phosphor bzw. Schwefel im Kristallgitter Plätze von Übergangsmetall einnimmt, oder - gemäß einer anderen Variante - dass Phosphor bzw. Schwefel mit einem oder mehreren Metalle der Gruppe 3 bis 12 des Periodensystems der Elemente eine Verbindung gebildet hat.

In einer Ausführungsform der vorliegenden Erfindung weist erfindungsgemäßes Elektrodenmaterial Schicht- oder Spinell-Struktur auf.

In einer Ausführungsform wählt man M aus Ni_{0,25}Mn_{0,75}. Diese Variante ist insbesondere dann bevorzugt, wenn man Mischoxid aus Verbindungen der Formel (I b) wählt.

In einer Ausführungsform der vorliegenden Erfindung wählt man M aus Ni_{0,33}Mn_{0,33}Co_{0,33}, Ni_{0,5}Mn_{0,3}Co_{0,2}, Ni_{0,4}Mn_{0,2}Co_{0,4}, Ni_{0,22}Mn_{0,66},Co_{0,12}, Ni₀,₄Co_{0,3}Mn_{0,3}, Ni_{0,45}Co_{0,1}Mn_{0,45}, Ni_{0,4}Co_{0,1}Mn_{0,5} und Ni_{0,5}Co_{0,1}Mn_{0,4}.

In einer Ausführungsform der vorliegenden Erfindung sind bis zu 10 Gew.-% von Metall der Gruppen 3 bis 12 des Periodensystems der Elemente ersetzt durch Al, beispielsweise 0,5 bis 10 Gew.-%. In einer anderen Ausführungsform der vorliegenden Erfindung ist M nicht zu messbaren Anteilen durch Al ersetzt.

In einer Ausführungsform der vorliegenden Erfindung ist bis zu 5 Gew.-% an Sauerstoff in Verbindung der allgemeinen Formel (I) durch F ersetzt. In einer anderen Ausführungsform der vorliegenden Erfindung sind keine messbaren Anteile von Sauerstoff durch F ersetzt.

Erfindungsgemäße Elektrodenmaterialien lassen sich beispielsweise nach dem erfindungsgemäßen Verfahren erhalten.

In einer Ausführungsform der vorliegenden Erfindung ist in erfindungsgemäßen Elektrodenmaterialien die Modifizierung, d. h. die Modifizierung mit Phosphor in der Oxidationsstufe +3 oder vorzugsweise +5 oder mit Schwefel in der Oxidationsstufe +6, gleichmäßig über die Oberfläche des Elektrodenmaterials verteilt. Darunter ist zu verstehen, dass Phosphoratome bzw. Schwefelatome nicht nur auf der äußeren Oberfläche, sondern auch in den Poren von Partikeln von Mischoxid verteilt sind.

In einer Ausführungsform der vorliegenden Erfindung ist die Modifizierung mit Phosphor in der Oxidationsstufe +3 oder vorzugsweise +5 oder mit Schwefel in der Oxidationsstufe +6 darüber hinaus so gleichmäßig, dass die Konzentration vorzugsweise um nicht mehr als ±20 mol-% abweicht, gemessen an der Oberfläche von Partikeln von Mischoxid, bevorzugt um nicht mehr als ±10 mol-%.

Erfindungsgemäße Elektrodenmaterialien sind sehr gut zu verarbeiten, beispielsweise aufgrund ihrer guten Rieselfähigkeit, und zeigen eine sehr gute Zyklenstabilität, wenn man elektrochemische Zellen herstellt unter Verwendung von erfindungsgemäßem modifiziertem Mischoxid herstellt.

Erfindungsgemäßes Elektrodenmaterial kann weiterhin kohlenstoff in elektrisch leitfähiger Modifikation enthalten, beispielsweise als Ruß, Graphit, Graphen, Kohlenstoff-Nanoröhren oder Aktivkohle.

Erfindungsgemäßes Elektrodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß. Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoff-Nanoröhren (englisch carbon nanotubes). Kohlenstoff-Nanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von Verbindung der allgemeinen Formel (I) und elektrisch leitfähigem, kohlenstoffhaltigem Material im Bereich von 200:1 bis 5:1, bevorzugt 100:1 bis 10:1.

Ein weiterer Aspekt der vorliegenden Erfindung ist eine Elektrode, enthaltend mindestens eine Verbindung der allgemeinen Formel (I), mindestens ein elektrisch leitfähiges, kohlenstoffhaltiges Material und mindestens ein Bindemittel.

Verbindung der allgemeinen Formel (I) und elektrisch leitfähiges, kohlenstoffhaltiges Material sind vorstehend beschrieben.

Ein weiterer Gegenstand der vorliegenden Erfindung sind elektrochemische Zellen, hergestellt unter Verwendung von mindestens einer erfindungsgemäßen Elektrode. Ein weiterer Gegenstand der vorliegenden Erfindung sind elektrochemische Zellen, enthaltend mindestens eine erfindungsgemäße Elektrode.

In einer Ausführungsform der vorliegenden Erfindung enthält erfindungsgemäßes Elektrodenmaterial:
im Bereich von 60 bis 98 Gew.-%, bevorzugt 70 bis 96 Gew.-% erfindungsgemäßes modifiziertes Mischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von erfindungsgemäßen Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 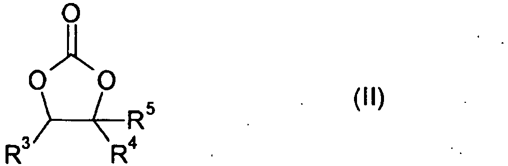 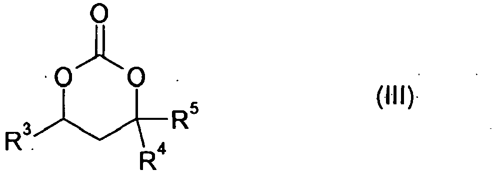 bei denen R³, R⁴ und R⁵ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R⁴ und R⁵ nicht beide tert.-Butyl sind.

In besonders bevorzugten Ausführungsformen ist R³ Methyl und R⁴ und R⁵ sind jeweils Wasserstoff, oder R⁵, R³ und R⁴ sind jeweils gleich Wasserstoff.

Ein anderes bevorzugtes cyclisches organisches Carbonat ist Vinylencarbonat, Formel (IV).

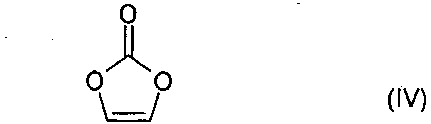

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₘ YLi, wobei m wie folgt definiert ist:
m = 1, wenn Y gewählt wird aus Sauerstoff und Schwefel,
m = 2, wenn Y gewählt wird aus Stickstoff und Phosphor, und
m = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischen Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

### I. Behandlung mit Phosphorverbindung

### 1.1 Behandlung von Mischoxid 1.1 mit Phosphorverbindung (P-1)

Man suspendierte 10 g LiNi_{0,5}Mn_{1,5}O₄ mit Spinellstruktur in 10 g Triethylphosphat O=P(OC₂H₅)₃ (P-1). Die so erhaltene Suspension würde eine Stunde lang bei 60°C unter Stickstoff gerührt. Anschließend filtrierte man die Suspension über eine Glasfritte. Das so erhältliche behandelte Mischoxid wurde anschließend in einem Drehrohrofen eine Stunde lang bei 160°C und danach 3 Stunden lang bei 500°C unter Stickstoff kalziniert. Man erhielt ein erfindungsgemäß behandeltes Mischoxid MOx-1. Den Phosphorgehalt des erfindungsgemäßen behandelten Mischoxids bestimmte man zu 0,030 Gew.-%. Ein Röntgendiffraktogramm zeigte, dass die Spinellstruktur erhalten geblieben war.

### I.2 Behandlung von Mischoxid 1.1 mit Phosphorverbindung (P-1)

Man suspendierte 10 g LiNi_{0,5}Mn_{1,5}O₄ mit Spinellstruktur in 10 g Triethylphosphat O=P(OC₂H₅)₃ (P-1). Die so erhaltene Suspension wurde eine Stunde lang bei 60°C unter Stickstoff gerührt. Anschließend dampfte man die Suspension mit Hilfe eines Rotationsverdampfers bei einem Druck von etwa 2 mbar und einer Heizbadtemperatur von 110°C bis zur Trockene ein. Danach kalzinierte man den so erhältlichen Rückstand in einem Drehrohrofen eine Stunde lang bei 160°C und danach 3 Stunden lang bei 500°C unter Stickstoff. Man erhielt erfindungsgemäß behandeltes Mischoxid MOx-1'. Den Phosphorgehalt des erfindungsgemäßen behandelten Mischoxids MOx-1' bestimmte man zu 0,022 Gew.-%. Durch ein Röntgendiffraktogramm konnte man nachweisen, dass die Spinellstruktur erhalten geblieben war.

### I.3 Behandlung von Mischoxid 1.1 mit Phosphorverbindung (P-1)

Man suspendierte 10 g LiNi_{0,5}Mn_{1,5}O₄ mit Spinellstruktur in 10 g Triethylphosphat O=P(OC₂H₅)₃ (P-1). Die so erhaltene Suspension wurde eine Stunde lang bei 60°C unter Stickstoff gerührt. Anschließend filtrierte man die Suspension über eine Glasfritte. Danach kalzinierte man den so erhältlichen Rückstand in einem Muffelofen eine Stunde lang bei 300°C unter Luft. Man erhielt erfindungsgemäß behandeltes Mischoxid MOx-1". Den Phosphorgehalt des erfindungsgemäßen behandelten Mischoxids MOx-1" bestimmte man zu 0,050 Gew.-%. Durch ein Röntgendiffraktogramm konnte man nachweisen, dass die Spinellstruktur erhalten geblieben war.

### I.4 Behandlung von Mischoxid 1.2 mit Phosphorverbindung (P-1)

Man suspendierte 10 g Li(Li_{0,20}Ni_{0,17}Co_{0,10}Mn_{0,53})O₂ mit Schichtstruktur in 10 g Triethylphosphat O=P(OC₂H₅)₃ (P-1). Die so erhaltene Suspension wurde eine Stunde lang bei 60°C unter Stickstoff gerührt. Anschließend filtrierte man die Suspension über eine Glasfritte. Danach kalzinierte man den so erhältlichen Rückstand in einem Muffelofen eine Stunde lang bei 300°C an Luft. Man erhielt erfindungsgemäß behandeltes Mischoxid MOx-2. Den Phosphorgehalt des erfindungsgemäßen behandelten Mischoxids MOx-2 bestimmte man zu 0,130 Gew.-%. Durch ein Röntgendiffraktogramm konnte man nachweisen, dass die Schichtstruktur erhalten geblieben war.

### 1.5 Behandlung von Mischoxid 1.1 mit Phosphorverbindung (P-1)

Man suspendierte 10 g LiNi_{0,5}Mn_{1,5}O₄ mit Spinellstruktur in einer Lösung von 0,5 g Triethylphosphat O=(OC₂H₅)₃ (B-1) in 12 g Ethanol. Die so erhaltene Suspension wurde 1 Stunde bei 60°C unter Stickstoff gerührt. Anschließend dampfte man die Suspension mit Hilfe eines Rotationsverdampfers bei einer Heizbadtemperatur von 70°C und einem Druck von zuerst 250 mbar, später dann 10 mbar, bis zur Trockene ein. Anschließend kalzinierte man den so erhältlichen Rückstand in einem Drehrohrofen für 1 Stunde bei 300°C und für 3 Stunden bei 500°C unter Stickstoff. Man erhielt erfindungsgemäß behandeltes Mischoxid MOx-1'". Den Phosphorgehalt des erfindungsgemäßen behandelten Mischoxids MOx-1'" bestimmte man zu 0,10 Gew.-%. Durch ein Röntgendiffraktogramm konnte man nachweisen, dass die Spinellstruktur erhalten geblieben war.

### I.6 Behandlung von Mischoxid 1.1 mit Phosphorverbindung (P-2)

Man füllte 25 g LiNi_{0,5}Mn_{1,5}O₄ mit Spinellstruktur in eine 2-l-Drehkugel aus Glas, die in einen Eingang und in 180°-Position einen Ausgang aufwies. Man spülte 30 Minuten mit trockenem Stickstoff bei Zimmertemperatur und heizte anschließend innerhalb von 10 Minuten auf 120°C auf. Dabei drehte man mit 5 Umdrehungen pro Minute. Man pumpte eine Stunde lang einen Gasstrom durch die Drehkugel, der 5 Vol.% O=P(CH₃)(OCH₃)₂ (P-2) enthielt, bezogen auf den Gasstrom. Den Gasstrom stellte man so ein, dass 10 Normliter Gas/h durchströmten. Danach wurde das so erhältliche Pulver auf Zimmertemperatur abgekühlt und in einen Umluftofen überführt. Danach heizte man in einem Umluftofen unter Luft innerhalb von 30 Minuten auf 300°C auf und behandelte 2 Stunden bei 300°C thermisch. Man erhielt erfindungsgemäß behandeltes Mischoxid MOx-1.1"". Den Phosphorgehalt des erfindungsgemäßen behandelten Mischoxids MOx-1"" bestimmte man zu 0,04 Gew.-%. Durch ein Röntgendiffraktogramm konnte man nachweisen, dass die Spinellstruktur erhalten geblieben war.

### II. Allgemeine Vorschrift zur Herstellung von Elektroden und Testzellen

### Eingesetzte Materialien:

Elektrisch leitfähige, kohlenstoffhaltige Materialien:
Kohlenstoff (C-1): Ruß, BET-Oberfläche von 62 m²/g, kommerziell erhältlich als "Super P Li" der Firma Timcal

Bindemittel (BM.1): Copolymer von Vinylidenfluorid und Hexafluorpropen, als Pulver, kommerziell erhältlich als Kynar Flex® 2801 der Fa. Arkema, Inc.

Angaben in % beziehen sich auf Gewichtsprozent, wenn nicht ausdrücklich anders angegeben.

Zur Bestimmung der elektrochemischen Daten der Materialien wurden 8 g erfindungsgemäßes Mischoxid MOx-1, 1 g Kohlenstoff (C-1) und 1 g (BM.1) unter Zusatz von 24 g N-Methylpyrrolidon (NMP) zu einer Paste vermischt.

Man beschichtete eine 30 µm dicke Aluminiumfolie mit der vorstehend beschriebenen Paste (Aktivmaterialbeladung 5-7 mg/cm²). Nach Trocknung bei 105°C wurden kreisförmige Teile den so beschichteten Aluminiumfolie (Durchmesser 20 mm) ausgestanzt. Aus den so erhältlichen Elektroden stellte man elektrochemische Zellen her.

Nach Trocknung bei 105°C wurden kreisförmige Elektroden (Durchmesser 20 mm) ausgestanzt und zu Testzellen verbaut. Als Elektrolyt wurde eine 1 mol/l Lösung von LiPF₆ in Ethylencarbonat/Dimethylcarbonat (1:1 bezogen auf Massenanteile) eingesetzt. Die Anode der Testzellen bestand aus einer Lithiumfolie, die über einen Separator aus Glasfaserpapier zur Kathodenfolie in Kontakt stand.

Man erhielt erfindungsgemäße elektrochemische Zellen EZ.1.

Man fertigte erfindungsgemäße elektrochemische Zelle EZ.6 an wie folgt:
Es wurden Testzellen mit Kathodenmaterialien aus den erfindungsgemäß behandelten Mischoxid MOx-1.1"" (Beispiel I.6) gefertigt, die analog zu II. mit Kohlenstoff (C-1) und mit polymerem Bindemittel (BM.1) verrieben worden waren. Als Vergleich wurde in analoger Weise eine Vergleichszelle mit einem unmodfizierten LiNi_{0,5}Mn_{1,5}O₄ mit Spinellstruktur gefertigt.

Messung von erfindungsgemäßen elektrochemischen Zellen:
Erfindungsgemäße elektrochemische Zellen EZ.6 wurden zwischen 4.9 V und 3.5 V bei 25°C in 100 Zyklen zyklisiert (geladen/entladen). Die Lade- und Entladeströme betrugen 150 mA/g Kathodenmaterial. Die Erhaltung der Entladekapazität nach 100 Zyklen wurde bestimmt.

EZ.6: 98,0%
Vergleichsbeispiel: 96,0%

Erfindungsgemäße elektrochemische Zellen zeigen einen Vorteil in der Zyklenstabilität.

Die Zellen wurden zwischen 4.9 V und 3.5 V bei 25°C in 100 Zyklen zyklisiert (geladen/entladen). Die Lade- und Entladeströme betrugen 150 mA/g Kathodenmaterial. Die Erhaltung der Entladekapazität nach 100 Zyklen wurde bestimmt.

## Patentansprüche

1. Verfahren zur Herstellung von Elektrodenmaterialien, **dadurch gekennzeichnet, dass** man ein Mischoxid, das Lithium und mindestens ein Übergangsmetall als Kationen aufweist, mit mindestens einer Sauerstoff-haltigen organischen Verbindung von Schwefel oder Phosphor oder einem korrespondierenden Alkalimetall- oder Ammoniumsalz einer Sauerstoff-haltigen organischen Verbindung von Schwefel oder Phosphor oder einem vollständig alkylierten Derivat einer Sauerstoff-haltigen Verbindung von Schwefel oder Phosphor behandelt.

2. Verfahren nach Anspruch 1, **dadurch gekennzeichnet, dass** man Sauerstoff-haltige Verbindung von Phosphor wählt aus Phosphaten und Phosphonaten, die zumindest partiell alkyliert sind.

3. Verfahren nach Anspruch 1 oder 2, **dadurch gekennzeichnet, dass** man Sauerstoff-haltige Verbindung von Phosphor oder Schwefel, ihr Alkalimetall- oder Ammoniumsalz in flüssiger Phase oder in der Gasphase auf Mischoxid, das Lithium und mindestens ein Übergangsmetall als Kationen aufweist, einwirken lässt.

4. Verfahren nach einem der Ansprüche 1 bis 3, **dadurch gekennzeichnet, dass** man Mischoxid in einem Gemisch mit mindestens einem weiteren Bestandteil von Elektroden gemeinsam behandelt, wobei Bestandteile von Elektroden gewählt werden aus Kohlenstoff und polymerem Bindemittel.

5. Verfahren nach einem der Ansprüche 1 bis 4, **dadurch gekennzeichnet, dass** man Mischoxid wählt aus Verbindungen der allgemeinen Formel (I)
Li_{z}MₓO_{y} (I)
in denen die Variablen wie folgt gewählt sind:
M ein oder mehrere Metalle der Gruppen 3 bis 12 des Periodensystems der Elemente,
x eine Zahl im Bereich von 1 bis 2,
y eine Zahl im Bereich von 2 bis 4,
z eine Zahl im Bereich von 0,5 bis 1,5.

6. Verfahren nach einem der Ansprüche 1 bis 5, **dadurch gekennzeichnet, dass** man vollständig alkylierte Derivate einer Sauerstoff-haltigen Verbindung von Phosphor wählt aus Verbindungen der allgemeinen Formel O=P(OR¹)₃ und Dialkylalkylphosphonaten der allgemeinen Formel R³-P(O)(OR¹)₂, wobei die Variablen wie folgt definiert sind:
R¹ gewählt aus Wasserstoff und C₁-C₆-Alkyl,
R³ gleich oder verschieden und gewählt aus Wasserstoff, Phenyl und C₁-C₆-Alkyl.

7. Elektrodenmaterial, erhältlich nach einem Verfahren nach einem der Ansprüche 1 bis 6.

## Claims

1. A process for producing electrode materials, which comprises treating a mixed oxide which comprises lithium and at least one transition metal as cations with at least one oxygen-containing organic compound of sulfur or phosphorus or a corresponding alkali metal or ammonium salt of an oxygen-containing organic compound of sulfur or phosphorus, or a fully alkylated derivative of an oxygen-containing compound of sulfur or phosphorus.

2. The process according to claim 1, wherein oxygen-containing compounds of phosphorus are selected from phosphates and phosphonates which have been at least partially alkylated.

3. The process according to claim 1 or 2, wherein the oxygen-containing compound of phosphorus or sulfur, or the alkali metal or ammonium salt thereof, in the liquid phase or in the gas phase, is allowed to act on mixed oxide which comprises lithium and at least one transition metal as cations.

4. The process according to any of claims 1 to 3, wherein mixed oxide is treated in a mixture together with at least one further constituent of electrodes, constituents of electrodes being selected from carbon and polymeric binder.

5. The process according to any of claims 1 to 4, wherein mixed oxide is selected from compounds of the general formula (I)
Li_{z}MₓO_{y} (I)
in which the variables are each selected as follows:
M is one or more metals of groups 3 to 12 of the Periodic Table of the Elements,
x is in the range from 1 to 2,
y is in the range from 2 to 4,
z is in the range from 0.5 to 1.5.

6. The process according to any of claims 1 to 5, wherein fully alkylated derivatives of an oxygen-containing compound of phosphorus are selected from compounds of the general formula O=P(OR¹)₃ and dialkyl alkylphosphonates of the general formula R³-P(O)(OR¹)₂, where the variables are each defined as follows:
R¹ is selected from hydrogen and C₁-C₆-alkyl,
R³ are the same or different and are selected from hydrogen, phenyl and C₁-C₆-alkyl.

7. An electrode material obtainable by a process according to any of claims 1 to 6.

## Revendications

1. Procédé de fabrication de matériaux d'électrode, **caractérisé en ce qu'**un oxyde mixte, qui comprend du lithium et au moins un métal de transition en tant que cations, est traité avec au moins un composé organique oxygéné de soufre ou de phosphore ou un sel de métal alcalin ou d'ammonium correspondant d'un composé organique oxygéné de soufre ou de phosphore ou un dérivé entièrement alkylé d'un composé oxygéné de soufre ou de phosphore.

2. Procédé selon la revendication 1, **caractérisé en ce que** le composé oxygéné de phosphore est choisi parmi les phosphates et les phosphonates qui sont au moins partiellement alkylés.

3. Procédé selon la revendication 1 ou 2, **caractérisé en ce que** le composé oxygéné de phosphore ou de soufre, son sel de métal alcalin ou d'ammonium, est laissé agir en phase liquide ou en phase gazeuse sur l'oxyde mixte qui comprend du lithium et au moins un métal de transition en tant que cations.

4. Procédé selon l'une quelconque des revendications 1 à 3, **caractérisé en ce que** l'oxyde mixte est traité en mélange avec au moins un autre constituant d'électrodes, les constituants d'électrodes étant choisis parmi le carbone et un liant polymère.

5. Procédé selon l'une quelconque des revendications 1 à 4, **caractérisé en ce que** l'oxyde mixte est choisi parmi les composés de formule générale (I)
Li_{z}MₓO_{y} (I)
dans laquelle les variables sont choisies de la manière suivants :
M un ou plusieurs métaux des groupes 3 à 12 du tableau périodique des éléments,
x un nombre dans la plage allant de 1 à 2,
y un nombre dans la plage allant de 2 à 4,
z un nombre dans la plage allant de 0,5 à 1,5.

6. Procédé selon l'une quelconque des revendications 1 à 5, **caractérisé en ce que** les dérivés entièrement alkylés d'un composé oxygéné de phosphore sont choisis parmi les composés de formule générale O=P(OR¹)₃ et les phosphonates de dialkylalkyle de formule générale R³-P(O)(OR¹)₂, les variables étant définies de la manière suivants :
R¹ choisis parmi hydrogène et alkyle en C₁-C₆,
R³ identiques ou différents et choisis parmi hydrogène, phényle et alkyle en C₁-C₆.

7. Matériau d'électrode, pouvant être obtenu par un procédé selon l'une quelconque des revendications 1 à 6.
